# EUROPEAN PATENT APPLICATION

(11) **EP 1 826 159 A1**
(43) Date of publication of application: **29.08.2007**
(21) Application number: 07075152.4
(22) Date of filing: 22.02.2007
(51) Int. Cl.: B65G 47/58, B65G 17/18

(54) **Conveying system**

(30) Priority: 22.02.2006 NL 1031219
(71) Applicant: Ammeraal Beltech B.V., 1704 AC Heerhugowaard (NL)
(72) Inventor: Boele, Hendrik, 1703 PR Heerhugowaard (NL); Spaans, Colin, 1705 NG Heerhugowaard (NL); Paardekooper, Jacobus G.M., 2241 MV Wassenaar (NL)
(74) Representative: Volmer, Johannes Cornelis

(57) **Abstract**

The invention relates to a conveying system (10) for conveying objects (12) over a conveying path, comprising a modular endless conveyor belt (14), and drive means (18) for driving the conveyor belt (14), wherein the conveyor belt (14) is provided with at least one guiding element (26) for moving at least one module (20') over at least part of the conveying path from a normal position to a raised operating position relative to the plane of transport of the modular conveyor belt, wherein the conveying system comprises a guiding system (24), arranged under the path of the guiding element, beyond the downstream reversing roller (16B) which is downstream viewed in the direction of transport.

## Description

The present invention relates to a conveying system for conveying objects, in particular bulk goods, over a conveying path.

Conveying systems for conveying objects over an inclined path - either upwards or downwards - are known. A system known for this purpose comprises an endless conveyor belt made of textile or plastic material having a continuous surface on which so-called fixed carrier members, such as upright fingers or surfaces, are provided. The conveyed objects, in particular bulk goods, rest against these carrier members, on the inclined sections of the conveying path. When the angle of the inclination is small, it is also possible to use such belts without carrier members. Conveying systems are also known, in particular with conveyor belts composed of modules, wherein movable carrier members are provided, which can be recessed into the carrying surface of a module. Another example of such conveying system is described in DE-U1-89 15 286, wherein one side of the carrier members ("Widerlager"), indepedently from adjacent modules, is arranged in a rotable manner on an axis like a connecting rod, which is traverse to the transport direction. The other side is provided with a slot shaped opening, in which such axis is able to slide. The conveying systems provided with recessable carrier members are intended for conveying parcels like boxes and cases. These systems are not suitable for conveying bulk goods, because such goods may pass between the carrier members. Furthermore, when such systems are being used to convey tacky or sticky products, for example pretreated (precooked) food products, such as chips, snacks and the like, a relatively large amount thereof may stick to the belt surface, and in particular to the corners and openings of the optionally fixed carrier members, and these products will therefore not be removed therefrom at the end of the conveying path. After a period of operation, the system is cleaned and the remaining product material is treated as waste and destroyed, which results in an economic drawback.

It is an object of the present invention to provide a conveying system wherein this drawback occurs to a lesser degree, or at least a usable alternative therefor.

This object is achieved according to the invention with a conveying system for conveying objects, in particular bulk goods, over a conveying path, comprising a modular endless conveyor belt which has a conveying part and a return part, which conveyor belt comprises modules having a supporting surface for carrying the objects, which modules are coupled to one another by means of at least one connecting pin, at least two reversing rollers over which the conveyor belt is guided and which determine the start and end positions of the conveying part and return part of the conveyor belt, and drive means for driving the conveyor belt, wherein the modular conveyor belt is provided with at least one guiding element for moving at least one module over at least part of the conveying path from a normal position into a raised operating position relative to the plane of transport of the modular conveyor belt, which guiding element, in the normal position, has a supporting face projecting underneath the plane of transport, and that the conveying system comprises a guiding system, arranged under the path of the guiding element, for supporting the guiding element over said part of the transport path, the guiding system being provided beyond the reversing roller which is downstream viewed in the direction of transport.

The conveying system according to the invention comprises a modular endless conveyor belt (also referred to as a link belt) which is composed of modules (links) or rows of modules which are coupled to one another by means of connecting pins. The conveyor belt is guided over reversing rollers (usually sprocket wheels with a link belt), which determine the starting and end positions of the conveying and return part of the conveyor belt. In the context of this application, the term conveying path is intended to refer to the path along which the objects travel from the feed position where they first touch the belt up to the discharge position where the majority of the products are removed from the belt. The conveying system furthermore comprises drive means for driving the conveyor belt. In most cases, one of the reversing rollers is driven. The modular conveyor belt is also provided with a guiding element for moving at least one module over at least part of the conveying path from a normal position into a raised operating position. In the normal position, the supporting surfaces of the modules are in one plane and together they define the transport plane of the modular conveyor belt. The raised operating position is a position in which the supporting surface of the respective module(s) is raised with respect to the top surface of the modular conveyor belt. This is contrary to the known conveying systems, which comprise modules having carrier members that are recessed in the supporting surface, wherein only the carrier members are movable between two different height positions, but the modules themselves are not. The guiding element has a supporting face which, in the normal position, projects underneath the bottom surface of the modular belt. A guiding system is provided underneath the movement path of the guiding element in the respective part of the conveying path, which guiding system supports the supporting face of the guiding element and thus moves the associated module into the raised operating position. The additional length of the conveyor belt which is required in order to move certain modules into the raised operating position is obtained from the sag of the belt in the return part. Such extra length is not required in the known conveying systems comprising modules having carrier members that are recessed in the supporting surface, because those modules themselves cannot be raised to a raised operating position, but only the recessed carrier members. This also applies to the system known from DE-U-89 15 286. In addition, the slot shaped opening of such carrier member, by means of which the carrier member is mounted on a connecting pin, can be easily filled with dirt, fat and the like, resulting in the movement of the carrier member being impeded. When a module is moved from the normal position, in which all modules are flat, to the raised operating position by means of the guiding element and the associated guiding system, the modules of the conveyor belt which are situated between two modules moved into the raised operating position form a compartment, as it were. The modules moved into the raised operating position act as supporting planes, against which the goods rest. With the system according to the invention, the guiding system extends beyond the reversing roller which is downstream viewed in the direction of transport (that is that reversing roller which is situated near the end of the conveying path). Thus, the transition from the raised operating position to the normal position takes place in the return part. After this transition, any products still sticking to the surface of the belt can be scraped off and incorporated in the normal product stream and are thus not considered as waste. To this end, an additional scraping element may be arranged downstream, viewed in the direction of transport, of this transition position in order to remove any last remains as well. Thus, the system according to the invention is eminently suitable for conveying bulk goods. The system is also easy to clean. Furthermore the system according to the invention results in less waste and therefore in a considerable saving in operation. The conveying system according to the invention is particularly suitable for use as an escalator belt, where products are conveyed between feed and discharge positions at different levels.

In the conveyor belt according to the invention a respective module or row of modules can be positioned in the raised operating position, such that thereby a supporting plane extending over the operating width of the conveyor belt is established, against which the products may rest. At least one adjacent module will also be lifted out of the transport plane because of the coupling of the respective module to adjacent modules located upstream as seen in the direction of transport, by means of the connecting pins. In other words the respective module is not movable indepently with respect to said adjacent modules. The contact face of the guiding member has a fixed position relative to the supporting surface of the associated module or row of modules, which is or are movable from a normal position to a position that is at a higher level with respect to the transport plane of the modular conveyor belt.

Incidentally, it should be noted here that a modular conveying system is known from Netherlands patent no. 1021084, in which the guiding system does not extend beyond the reversing roller provided at the end of the conveying path. This known system is likewise suitable for use as an escalator belt or compartmentalized belt for conveying individual objects, such as suitcases at an airport, with a distance between them. However, the guiding system at the reversing rollers is absent, so that the carrier members formed by raised modules do not impede the subsequent movements of the objects at the end of the conveying path.

With the conveying system according to the invention, no separate carrier members which permanently project out of the plane of transport and would impede a scraping movement are provided, but during operation one or more modules are themselves moved relative to the plane of transport of the belt in order to thus form a temporary boundary or supporting plane which extends over the width of the conveyor belt. To this end, the conveyor belt is provided, at the positions of the relevant modules, with a guiding element which has a supporting face which projects underneath the plane of transport in the normal position of the conveyor belt. The module is then in the plane of transport. The plane of transport is the supporting surface of the modules in the normal position parallel to the direction of transport. However, at those locations where the supporting face of the guiding element is in contact with the guiding system situated underneath, the guiding element is pushed upwards, and as a result thereof the relevant module and one or more subsequent adjacent modules. In this position, the modules which have been pushed upwards are then no longer in the plane of transport, but are at an angle thereto. Preferably, the supporting surface of the module which is provided with a guiding element is at right angles to the plane of transport of the conveyor belt. This results in a good supporting plane, against which in particular bulk goods which are conveyed upwards or downwards can rest. In contrast to the modular conveyor belt known from the prior art which can serve as an escalator belt, the guiding element is also in contact with the guiding system at the reversing roller which is downstream viewed in the direction of transport, which guiding system extends beyond this reversing roller. Thus, the return movement from the raised operating position to the normal position of the modules takes place in the return part of the conveyor belt. This results in a smooth run of the conveyor belt over the conveying path.

Although with the reversing roller there is in theory sufficient space between the sprocket wheels, which are mounted on a (driven) shaft, to place a fixed guiding system there, the guiding system at that position is preferably formed by a guide disc provided on a reversing roller. Thus, the guiding element of the conveyor belt is in contact with this guide disc when it passes the reversing roller, as a result of which the relevant modules remain in a raised operating position.

Preferably, a lateral guiding system is provided on the sides of the conveyor belt, which for one thing prevents products from being able to fall off the belt, which is definitely an advantage with bulk products. To this end, the width of the at least one module which can be moved from the normal position to an operating position which is raised relative to the plane of transport of the modular conveyor belt is preferably smaller than the width of the adjacent modules which cannot be moved to a raised operating position. With this embodiment, the sides of the modules which can be moved to a raised operating position slide along the lateral guides, while the side sections of the modules which cannot be moved to a raised operating position are able to slide underneath the lateral guides and are thus kept in a flat position in the plane of transport. Secondly, the lateral guiding system also functions in this way as a means for keeping those modules in the normal position, in other words as a keep-down mechanism. An example of a suitable lateral guide is a L-profiled section.

In order to reduce the forces which are passed to the relevant module by the guiding element and thus to the adjacent modules and to retain the generally flat compartments, the guiding elements are advantageously provided near the edges of the at least one module which can be moved from a normal position to an operating position which is raised relative to the plane of transport of the modular conveyor belt, and the modules which cannot be moved to a raised operating position are provided with keep-down rollers near the edges. These rollers roll underneath the lateral guides.

In another embodiment of the conveying system according to the invention a keep-down mechanism is provided at the bottom side of a module, which cannot be raised from a normal position to an operating position raised with respect to the transport plane of the modular conveyor belt. This keep-down mechanism engages the bottom side of the module, as a result of which the full supporting surface can be utilized as the operating width of the conveyor belt. Then an optionally present lateral guiding system only fulfills the function mentioned previously of preventing products to fall from the lateral edges of the conveyor belt. An embodiment of such keep-down mechanism comprises a keep-down roller, which is arranged in a position spaced apart from the bottom side of the respective module and rotably on an axis transverse to the direction of transport, and a roller guiding system, which is arranged between the keep-down roller and the conveyor belt and which extends over said part of the conveying path and which is provided with a guiding surface for guiding the keep-down roller, which surface faces away from the transport plane of the conveyor belt.

Advantageously, the roller guiding system comprises two T-profiled sections which are arranged parallel to each other leaving clear a gap between neighbouring arms of the T-profiled sections. The gap contains a carrying arm for the keep-down roller, the upper end of which is fixed to the bottom side of a module that is not to be positioned in different positions during operation, wherein the keep-dwon roller is provided rotably at the other end of the carrying arm. For example, this other end is provided with a bore extending transversely to the direction of transport of the conveyor belt, wherein a rotary axle is mounted. A keep-down roller is situated on an end of the rotary axle extending out of the bore. The tread of the keep-down roller contacts the bottom of the arm of the respective T-profiled section. In view of traction distribution advantageously the rotary axle extends on both sides out of the bore and one or more keep-down rollers are mounted on both extending ends, which keep-doen rollers contact the bottom of the arm of the respective T-profiled section.

In another favourable embodiment the top side of a T-profiled section, preferably the top sides of both T-profiled sections, serves as a guiding system for guiding the guiding element that cooperates with the module, which can be moved from a normal position to a raised operating position relative to the transport plane of the modular conveyor belt and vice versa. The guiding element may comprise a carrying arm having a stationary sliding face, or one or more guiding rollers, which are arranged on an axis situated transversely to the direction of transport of the conveyor belt, both embodiments acting as a supporting face for the guiding element.

In a further embodiment the roller guiding system is arranged according to the longitudinal centre line of the conveyor belt. Advantageously a first module that cannot be positioned in different positions, is provided with a first keep-down mechanism, preferably a keep-down roller, the module, which is situated upstream as viewed in the direction of transport and which can be moved to different positions, is provided with a guiding mechanism, preferably a guiding roller, and a module, which in the upstream direction is at a distance of at least one module from the module having guiding means, is also provided with a keep-down mechanism, again preferably a keep-down roller. In this way the conveyor belt can be guided well over the part of the conveying path, where a module has been positioned in a raised operating position.

The guiding element may be a guiding roller, wherein the tread functions as a supporting face.

In another embodiment the guiding element has a stationary sliding or contact face acting as supporting face, which is in contact with the guiding system which advantageously is substantially flat. This increases the smooth movement of the conveyor belt along the conveying path.

The guiding element may be an integral part of the respective module, as well as a separate component thereof. With both possibilities the guiding element is connected either directly or by means of the module, in a rotary fixed way to two axis, in particular connecting pins.

In order to position a module virtually at right angles to the plane of transport, such guiding element is preferably a body which is substantially triangular in side view and is connected at two corners by at least one connecting pin, two sides of the triangular body more preferably enclosing an angle of 90°.

In order to make it possible for the movement from the normal position to the raised operating position and vice versa to take place smoothly, the guiding element preferably has a concave supporting face on which the module(s) which is upstream viewed in the direction of transport rests in the raised operating position.

In order to be able to use the conveying system for the transport of sticky products, the conveying system is preferably provided with a scraping element under the return part, near the end position of the guiding system.

The conveying system can be used as an escalator belt for transport on an inclined path, the reversing rollers being arranged at different levels relative to the stationary surroundings. It will be understood that horizontal transport is likewise possible.

The modules may have a closed supporting surface, but may also be of the open type, depending on the kind, shape and dimensions of the products to be conveyed. An open type is, for example, illustrated in WO 99/48779. The open embodiment is particularly suitable for wet applications. Examples of materials from which the modules can be made include plastics, such as polyethylene, polypropylene, polyester, nylon and acetal. The plane of the guiding system, with which the supporting face of the guiding element, which is often also made from one of the abovementioned plastics, is in contact when it is in the raised operating position, is advantageously made from a plastic having good sliding properties, such as high-density polyethylene. A conveying system which is essentially made from such plastics produces hardly any noise and thus causes hardly any noise nuisance.

The invention also relates to a method of conveying bulk goods, in particular sticky goods like fat goods, for example chips and other potato products, using a conveying system comprising an endles modular conveyor belt, over a conveying path, in particular an upwardly inclined path, wherein the reversing rollers are arranged at different heights, which method comprises providing a conveying system according to the invention, driving the conveyor belt by means of the driving means and contacting the guiding element with the guiding system, such that a module together with one or more adjacent modules is positioned in a raised operating position relative to the transport plane of the modular conveyor belt over at least a part of the conveying path between a first position and a second position situated beyond the reversing roller located downstream, products are loaded on the conveyor belt at a feed position that is situated downstream of the first position, and unloaded at a discharge position that is situated upstream of the second position.

The invention will be explained below with reference to the attached drawings, in which:
Fig. 1 diagrammatically shows an embodiment of a conveying system according to the invention;
Fig. 2 illustrates the operation of the system in a side view;
Fig. 3 shows a part of the conveyor belt illustrated in Fig. 1 in plan view;
Fig. 4 shows a part of the conveying system illustrated in Fig. 1 in cross section;
Fig. 5 illustrates a detail from Fig. 4;
Fig. 6 shows a detail of an embodiment of a reversing roller used in the conveying system;
Fig. 7 is a cross-section of a second embodiment of the conveying system according to the invention;
Fig. 8 shows a top view of the embodiment of fig. 7; and
Fig. 9 is a cross-section of the embodiment of figs. 7 and 8 at a different location.

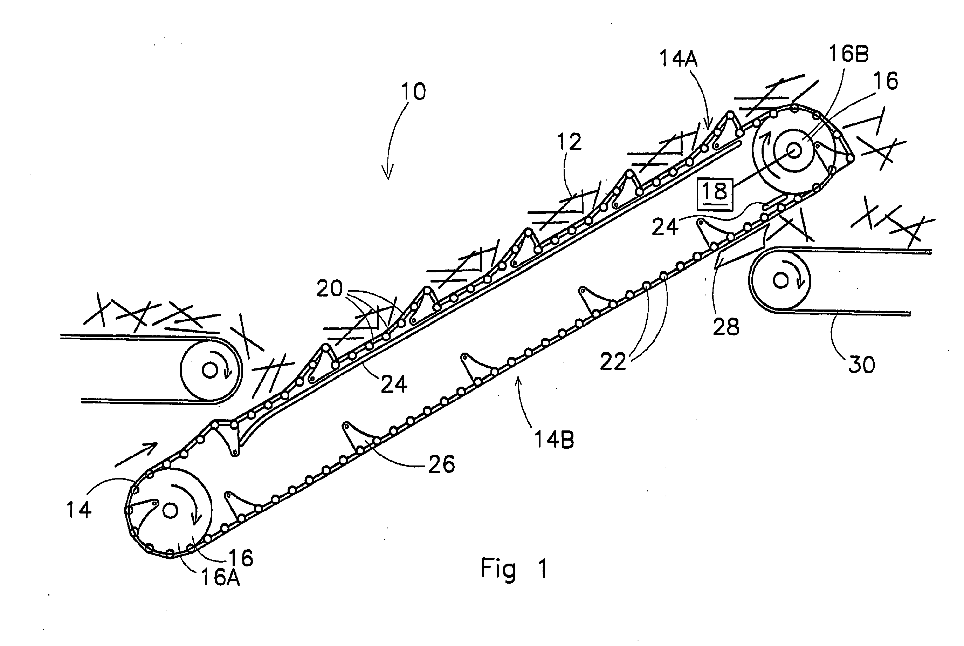

Fig. 1 shows an embodiment of a conveying system 10 according to the invention. In the situation illustrated, this system 10 is used for conveying bulk goods 12 upwards. The system 10 comprises a modular endless conveyor belt 14 which is guided over two reversing rollers 16, of which one is driven with the aid of a diagrammatically illustrated motor 18. The reversing rollers 16 are arranged at different heights. The modular conveyor belt 14 is composed of links or modules 20, which are coupled to one another by means of connecting pins 22, which are situated in eyes having a substantially circular through-opening, the eyes being provided at the front and rear side of the modules. The direction of transport is indicated with an arrow. The top part of the modular conveyor belt 14 on which the products 12 are conveyed is referred to as the conveyor part 1A and the returning part of the conveyor belt 14 is referred to as return part 14B. The conveying path is the path which the products 12 travel on the conveyor track 14: in the situation illustrated from a feed position beyond (downstream of) the bottom reversing roller 16A to the top reversing roller 16B, where the products 12 fall from the conveyor belt 14 at a discharge position. With modular conveyor belts, the reversing rollers 16 are usually sprocket wheels. A guiding system 24 is installed under part of the conveying part 14A which ensures that the modules 20' which are provided with a guiding element 26 and directly adjacent (as seen in the direction of transport upstream) modules are raised upwards relative to the plane of the conveyor belt 14, and these modules 20' can thus function as supporting surfaces for the bulk goods 12 over the width of the conveyor belt 14. The guiding system 26 extends beyond the top reversing roller 16B as far as in the returning path of the conveyor belt 14. Due to its own weight, the return part 14B sags slightly and thus provides additional length for the relative displacement of the modules 20' and guiding elements 26 and adjacent modules. A scraping element 28 is arranged near the end of the guiding system 24 which removes any products 12 which may still be present and stuck to the conveyor belt 14. The products may, for example, fall onto a subsequent conveyor belt 30 for further transport. As is apparent from these figs., a module 20' as a whole is pushed out of the transport plane, wherein the adjacent upstream module is also displaced hinged about the respective connecting pin, out of the transport plane.

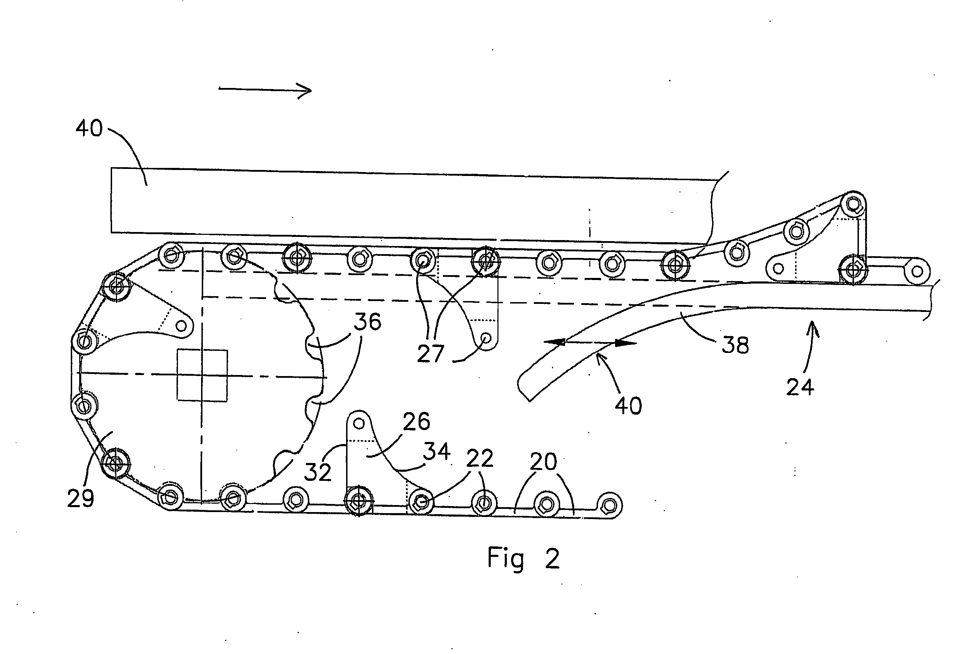

Fig. 2 shows a side view of the construction of an embodiment of the modular conveyor belt 14 and the operation of the system according to the invention. The modules 20 of the conveyor belt are coupled to one another by means of connecting pins 22 by means of eyes 31 having therein round openinings 32. Certain modules 20' are provided with a guiding element 26. In the embodiment illustrated, the guiding element 26 comprises a triangular body with one right angle of 90°. The straight side of the element 26 serves as contact face 32 which, if present, rests on the guiding system, whereas the hypotenuse has a concave surface 34 on which a subsequent module 20 may rest. The element 26 is provided with through-openings 27 at the corners for accommodating a connecting pin 22. Because of the "rotary fixed" coupling of the guiding element 26 via de two connecting pins 22, the contact face 31 takes a fixed position with respect to the associated module 20' in any situation. The sprocket wheel 29 of the bottom reversing roller 16A is provided with recesses 36, in which the coupling parts (eyes 31) of adjacent modules 20 connected to one another by the connecting pin 22 are accommodated. Here, the guiding system 26 comprises a strip 38 with a bent end 40, as a result of which a module 20' is gradually taken to the raised operating position when the contact face 32 of a guiding element 26 comes into contact with this end. The guiding system 24 may be displaceable in the direction of transport (indicated by a double arrow) so as to be able to vary the position for moving the relevant modules into the raised operating position. As is evident from this figure, the module 20' with guiding element 26 is positioned substantially at right angles to the module which is adjacent viewed in the direction of transport. As a result, a suitably directed supporting plane for objects to be conveyed is created. This Fig. 2 also illustrates a lateral guide 40, which accommodates the lateral edges of modules which can not be moved to a raised operating position, as will be explained in more detail below.

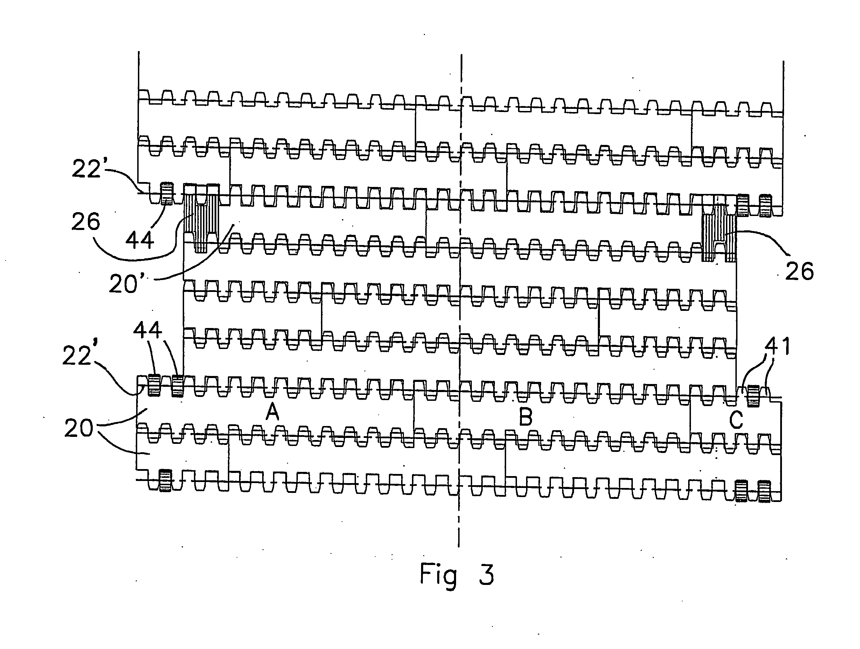

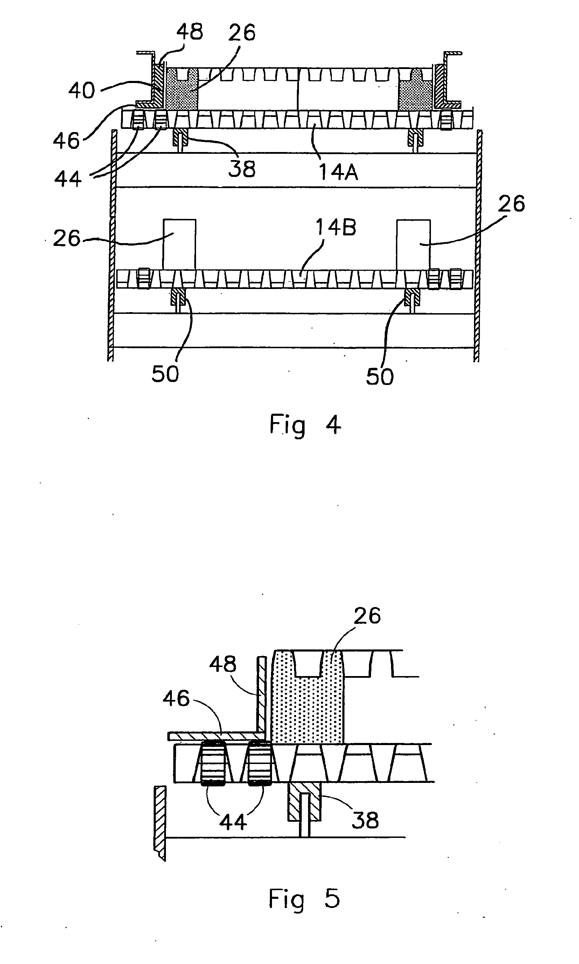

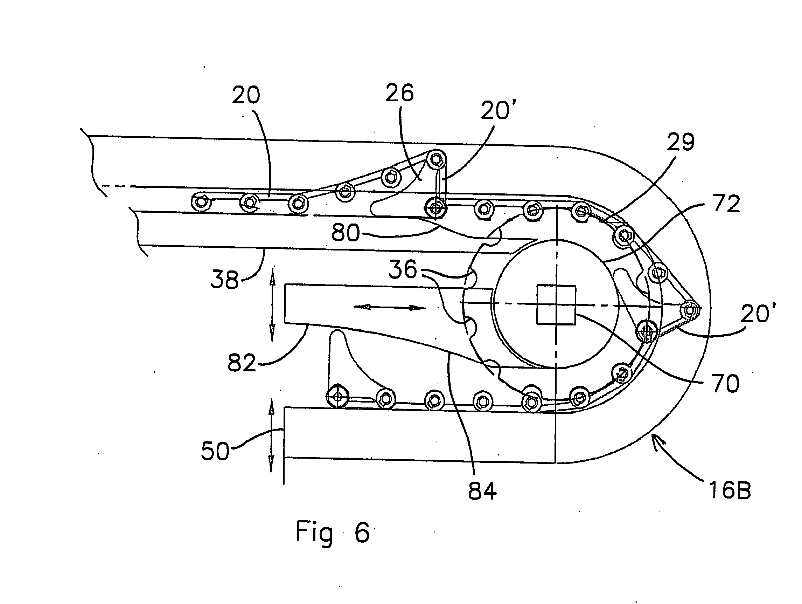

Fig. 3 shows in top view that the modules 20 have a continuous surface. A module 20 may consist along the width of a row of sub-modules 20A, 20B, 20C. The module 20' is provided on both lateral edges 42 with a guiding element 26. The width of this module 20' and of the other modules which can be moved to a raised operating position is smaller than that of the modules which cannot be moved to a raised operating position in order to allow the required relative displacement between the lateral guides 40 (not shown in Fig. 3; see Figs. 4 and 5) arranged on either side. On the connecting pins 22', which connect the first and last modules which can be moved to a raised operating position with the relevant wider modules, on the ends between the projections 41 of the wider modules, rotatable rollers 44 are arranged.

These rollers 44 (see Figs. 4 and 5) roll underneath the horizontal leg 46 of the lateral guides 40, which have an L-shaped profile and cause the wider modules 20 to be pushed down and thus define and maintain a flat plane of transport. The upright leg 48 of the lateral guides 40 provides a lateral boundary for both edges, so that the products cannot fall off the conveyor belt 14. Figs. 4 and 5 furthermore show that the strips 38 which form the guiding system are provided under the tracks of the guiding elements 26 on both sides of the conveyor belt 14. At the bottom in Fig. 4, the return part 14B of the conveyor belt 14 is also illustrated in cross section, this part being supported by guides 50. Fig. 5 shows the relationship between the rollers 44 and the lateral guides 42, on the one hand, and the guiding elements 26 and strips 38, on the other hand, in more detail.

Fig. 6 illustrates an embodiment of the top reversing roller 16B in side view. The gear wheels 29 with recesses 36 are provided on both ends of a shaft 70. At a position corresponding to that of a guiding element 26 for the conveyor belt, a guide disc 72 is provided, so that the discs 72 keep the guiding elements, and thus the relevant modules, in a raised operating position when they pass the reversing roller. The diameter of these discs 72 is such that a multiple of the pitch of the module 20 is created, so that the belt fits into the recesses 36. The end 80 of the strip 38 near the disc 72 is provided with a gradual transition, so that the supporting plane, formed by a module placed in its operating position, is at a relatively great angle to the plane of transport. Furthermore, a top guide 82 and a bottom guide 50 are also illustrated in the first part of the return part. The vertical and horizontal positions of both can be adjusted. The top guide 82 of the guiding system 24 has a curved guiding surface 84 so that the return of a module from the raised operating position to the normal flat position takes place smoothly.

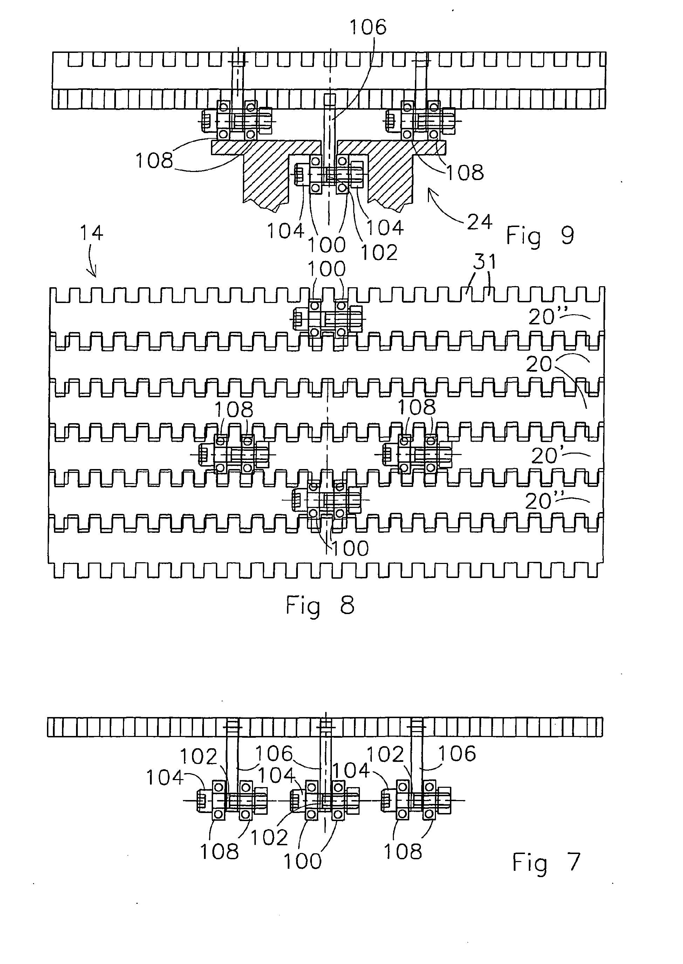

Figs. 7-9 illustrate another preferred embodiment of the conveying system 10 according to the invention, wherein similar parts are indicated by similar reference numerals. An endless conveyor belt 14 is composed of modules 20, which are coupled to each other by means of coupling parts 31 and connecting pins (not shown) in a manner as described above. A module 20" situated downstream from the module 20' that is to be moved upwardly, is provided with a set of keep-down rollers 100 at its bottom in the centre, which rollers are rotably mounted on a rotary axle 102 with the aid of nuts 104. At its centre, the rotary axle 102 is fixed to a carrying arm 106. The module 20' is provided with guiding rollers 108, which are staggered with respect to the centre, and which are fixed to the bottom of the module 20' in a manner as described for the keep-down rollers 100. In the embodiment shown, the third module - also indicated as 20" - and situated upstream of module 20' is also provided with keep-down rollers 100. A guiding system 24 is arranged beneath the respective part of the conveying path. This system 24 comprises two T-profiled sections 110, which are arranged parallel to each other and spaced apart over a distance of at least the cross-section of the carrying arm 106 of the guiding rollers 108. The bottom side of the neighbouring arms 112 acts as a tread for the keep-down rollers 100, while the top side of the arms 112 acts as a tread for the guiding rollers 110.

## Claims

1. Conveying system (10) for conveying objects (12) over a conveying path, comprising a modular endless conveyor belt (14) which has a conveying part (14A) and a return part. (14B), which conveyor belt (14) comprises modules (20) having a supporting surface, which modules are coupled to one another by means of at least one connecting pin (22), at least two reversing rollers (16) over which the conveyor belt (14) is guided and which determine the start and end positions of the conveying and return part (14A, 14B) of the conveyor belt (14), and drive means (18) for driving the conveyor belt (14), in which the modular conveyor belt (14) is provided with at least one guiding element (26) for moving at least one module (20') over at least part of the conveying path from a normal position to a raised operating position relative to the plane of transport of the modular conveyor belt, which guiding element (26), in the normal operating position, has a supporting face (32) projecting underneath the plane of transport, and that the conveying system (10) comprises a guiding system (24) arranged under the path of the guiding element, for supporting the guiding element over said part of the transport path, which guiding system (24), viewed in the direction of transport is provided beyond the reversing roller (16B) which is downstream viewed in the direction of transport.

2. Conveying system according to claim 1, wherein the contact face (32) of a guiding element (26) has a fixed position with respect to the supporting surface of the associated module (20'), which is movable from a normal position to a raised operating position relative to the plane of transport of the modular conveyor belt.

3. Conveying system according to claim 1 or 2, wherein the guiding system (24), at the position of the transition from the conveyor part (14A) to the return part (14B), comprises a guide disc (72) provided on the reversing roller (16B).

4. Conveying system according to one of the preceding claims, wherein the width of the at least one module (20') which can be moved from a normal position to an operating position which is raised relative to the plane of transport of the modular conveyor belt is smaller than the width of the modules (20) which cannot be moved to a raised operating position.

5. Conveying system according to one of the preceding claims, wherein a guiding element (26) is provided near the edges of the at least one module (20') which can be moved from a normal position to an operating position which is raised relative to the plane of transport of the modular conveyor belt.

6. Conveying system according to one of the preceding claims, wherein a module (20) which cannot be moved to a raised operating position is provided with rollers (44) near the edges.

7. Conveying system according to claim 6, wherein lateral guides (42) are provided which are arranged above the edges of the conveying part (14A) in such a manner that the rollers (44) are in contact with the latter.

8. Conveying system according to one of the preceding claims, wherein a guiding element (26) has a contact face which is substantially flat.

9. Conveying system according to one of the preceding claims, wherein the guiding element (26) comprises a substantially triangular body which is rotably connected at two corners by at least a connecting pin (22).

10. Conveying system according to claim 9, wherein 2 sides of the triangular body enclose an angle of 90°.

11. Conveying system according to one of the preceding claims, wherein the guiding element (26) has a concave supporting face (34).

12. Conveying system according to one of the preceding claims, wherin a keep-down mechanism is provided at the bottom of a module (20"), which cannot be moved for a normal position to a raised operating position relative to the plane of transport of the modular conveyor belt.

13. Conveying system according to claim 12, wherein the keep-down mechanism comprises a keep-down roller (100), which is arranged spaced apart from the bottom side of the respective module (20") and rotably on an axis (102) arranged transversely to the direction of transport, and a guiding system 924), which is arranged between the keep-down roller (100) and the conveyor belt (14) and which extends over said part of the conveying path and which is provided with a tread for guiding the keep-down roller (100), which surface is faces away from the conveyor belt.

14. Conveying system according to one of the preceding claims, wherein a scraping element (28) is provided under the return part (14B), near the end position of the guiding system (24).

15. Conveying system according to one of the preceding claims, wherein the reversing rollers (16) are arranged at different levels relative to the stationary surroundings.
